# EUROPÄISCHE PATENTSCHRIFT

(11) **EP 3 940 216 B1**
(45) Veröffentlichungstag und Bekanntmachung des Hinweises auf die Patenterteilung: **13.03.2024**
(21) Anmeldenummer: 21178662.9
(22) Anmeldetag: 10.06.2021
(51) Int. Cl.: F02D 9/04, F01N 13/00, F02D 9/10, F16K 1/22

(54) **ABGASKLAPPE**
EXHAUST VALVE
CLAPET D'ÉCHAPPEMENT

(30) Priorität: 13.07.2020 DE 102020118355
(43) Veröffentlichungstag der Anmeldung: 19.01.2022
(73) Patentinhaber: Purem GmbH, 66539 Neunkirchen (DE)
(72) Erfinder: Grün, Matthias, Altbach (DE); Birgler, Markus, Wernau (DE); Lory, Markus, Stuttgart (DE); Wacker, Andreas, Plochingen (DE); Zeumer, Annika, Wernau (DE); Schenk, Ralph, Stuttgart (DE); Novosel, Miljenko, Stuttgart (DE)
(74) Vertreter: Ruttensperger Lachnit Trossin Gomoll

(56) Entgegenhaltungen:
- DE-A1-102010 055 382
- DE-A1-102017 117 289
- DE-A1-102018 204 431
- US-A1- 2012 007 008

## Beschreibung

Die vorliegende Erfindung betrifft eine Abgasklappe, insbesondere für den Abgasstrom einer Brennkraftmaschine, umfassend ein Klappenrohr, eine im Inneren des Klappenrohrs an einer um eine Schwenkachse drehbaren Schwenkwelle getragene Klappenblende, wobei die Schwenkwelle in jedem ihrer beiden axialen Endbereiche vermittels einer Lageranordnung an dem Klappenrohr drehbar getragen ist, wobei die Schwenkwelle in einem ersten axialen Endbereich zur Ankopplung an ein Antriebsorgan eines Schwenkantriebs ausgebildet ist.

Eine derartige Abgasklappe ist aus der DE 10 2016 114 704 A1 bekannt. Bei dieser Abgasklappe ist die Schwenkwelle in ihren beiden axialen Endbereichen in jeweiligen am Klappenrohr angeordneten Lagerbuchsen bzw. darin angeordneten Schwenklagern um die Schwenkachse schwenkbar getragen. Bei einer durch einen Schwenkantrieb ausgelösten Verschwenkung der Schwenkwelle entsteht im Bereich der im Allgemeinen als Gleitlager ausgebildeten Schwenklager Reibung. Diese Reibung kann zu einer Schwingungsanregung der Schwenkwelle und somit insbesondere auch der die Schwenkwelle mit dem Schwenkantrieb koppelnden Kopplungsanordnung führen. Eine derartige Schwingungsanregung im Bereich der Schwenkwelle bzw. der Kopplungsanordnung kann zur Emission von in einem Fahrzeug wahrnehmbarem Schall führen.

Aus der DE 10 2018 204 431 A1 ist eine Abgasklappe gemäß dem Oberbegriff des Anspruchs 1 bekannt. Bei dieser Abgasklappe ist an einem der axialen Endbereiche einer Schwenkwelle derselben ein Radialvorsprung der Schwenkwelle zwischen zwei diesen axial einspannenden Drahtkissenlagerteilen gehalten, welche wiederum über ein Vorspannungselement an einem Lagerbuchsenboden einer diesen Endbereich der Schwenkwelle aufnehmenden Lagerbuchse abgestützt sind.

Bei einer aus der DE 10 2017 117 289 A1 bekannten Abgasklappe ist ein an einem axialen Endbereich einer Schwenkwelle derselben angeordnetes, radial vorspringendes Lagerelement in einer axialen Richtung an einem Dämpfungselement abgestützt.

Die DE 10 2010 055 382 A1 offenbart eine Betätigungsvorrichtung für eine Abgasklappe, bei welcher zwischen einem Stellarm und einem Klappenelement ein temperaturbeständiges Dämpfungselement angeordnet ist.

Es ist die Aufgabe der vorliegenden Erfindung, eine Abgasklappe vorzusehen, bei welcher die Abgabe von durch Schwingungen im Bereich der Abgasklappe generiertem Schall unterdrückt wird.

Erfindungsgemäß wird diese Aufgabe gelöst durch eine Abgasklappe, insbesondere für den Abgasstrom einer Brennkraftmaschine, gemäß Anspruch 1. Diese umfasst ein Klappenrohr, eine im Inneren des Klappenrohrs an einer um eine Schwenkachse drehbaren Schwenkwelle getragene Klappenblende, wobei die Schwenkwelle in jedem ihrer beiden axialen Endbereiche vermittels einer Lageranordnung an dem Klappenrohr drehbar getragen ist, wobei die Schwenkwelle in einem ersten axialen Endbereich zur Ankopplung an ein Antriebsorgan eines Schwenkantriebs ausgebildet ist.

Die erfindungsgemäße Abgasklappe zeichnet sich dadurch aus, dass die Schwenkwelle in wenigstens einem axialen Endbereich in Kontakt mit bezüglich des Klappenrohrs getragenem Schwingungsdämpfungsmaterial ist.

Durch das Vorsehen von Schwingungsdämpfungsmaterial im Bereich wenigstens eines axialen Endbereichs der Schwenkwelle wird das Entstehen von Schwingungsanregungen im Bereich der Schwenkwelle im Wesentlichen unterdrückt bzw. wird dafür gesorgt, dass im Bereich der Abgasklappe gegebenenfalls entstehende oder auf diese übertragene Schwingungen im Wesentlichen nicht zu einer Schallemission führen.

Für ein ausgeprägtes Dämpfungsverhalten wird vorgeschlagen, dass das Schwingungsdämpfungsmaterial poröses Material umfasst. Als besonders geeignet hat sich dabei der Einsatz von offenporigem Material für das Schwingungsdämpfungsmaterial erwiesen.

Da im Bereich einer derartigen Abgasklappe im Allgemeinen sehr hohe Temperaturen vorherrschen, wird vorgeschlagen, dass das Schwingungsdämpfungsmaterial Drahtmaterial umfasst. Dadurch wird ein temperaturresistenter Aufbau gewährleistet.

Aufgrund einer zum Erhalt einer definierten Dämpfungscharakteristik einstellbaren Struktur für das Drahtmaterial ist es besonders vorteilhaft, wenn das Drahtmaterial Drahtgestrick, Drahtgewirk, Drahtgeflecht, oder Drahtgewebe umfasst. Derartiges Material kann einerseits durch die Auswahl des Draht-Rohmaterials, andererseits durch die Einstellung der Herstellungsparameter mit einer definierten Struktur, insbesondere einer definierten Dichte des Drahtmaterials bereitgestellt werden. Alternativ kann für das Drahtmaterial Draht-Wirrmaterial eingesetzt werden, in welchem ein im Wesentlichen ungeordneter Verlauf der dieses Material bildenden Drahtabschnitte vorliegt. Derartiges Draht-Wirrmaterial kann beispielsweise als sogenannte Drahtwolle bereitgestellt sein.

Für eine einfach zu realisierende Ausgestaltung ist die Schwenkwelle in ihrem zweiten axialen Endbereich in Kontakt mit dem Schwingungsdämpfungsmaterial.

Um sowohl eine definierte Lagerung im zweiten axialen Endbereich der Schwenkwelle, als auch einen Kontakt zwischen der Schwenkwelle und dem Schwingungsdämpfungsmaterial in baulich einfacher und kompakter Bauweise zu ermöglichen, umfasst die in Zuordnung zu dem zweiten axialen Endbereich der Schwenkwelle vorgesehene zweite Lageranordnung eine an dem Klappenrohr vorgesehene zweite Lagerbuchse und ein in der zweiten Lagerbuchse angeordnetes, die Schwenkwelle radial bezüglich der Schwenkachse lagerndes zweites Schwenklager, beispielsweise Gleitlager, und das Schwingungsdämpfungsmaterial ist axial zwischen der Schwenkwelle und einem Lagerbuchsenboden angeordnet. Eine derartige Anordnung des Schwingungsdämpfungsmaterials ist insbesondere möglich, wenn das zweite Schwenklager nur zur radialen Lagerung der Schwenkwelle, nicht aber zur axialen Abstützung derselben dient.

Für eine definierte Wechselwirkung des Schwingungsdämpfungsmaterials mit der Schwenkwelle einerseits und eine definierte Positionierung des Schwingungsdämpfungsmaterials in der Lagerbuchse andererseits ist vorgesehen, dass das Schwingungsdämpfungsmaterial einen die Schwenkwelle im zweiten axialen Endbereich an einer axialen Stirnseite berührenden Schwingungsdämpfungsmaterial-Kontaktbereich und einen an dem Lagerbuchsenboden angebrachten Schwingungsdämpfungsmaterial-Befestigungsbereich umfasst.

Um eine möglichst große Wechselwirkungsfläche zwischen dem Schwingungsdämpfungsmaterial und der Schwenkwelle erreichen zu können, weist bei einer erfindungsgemäßen Ausgestaltungsvariante der Schwingungsdämpfungsmaterial-Kontaktbereich einen axial in Richtung auf die axiale Stirnseite der Schwenkwelle zu hervorstehenden Schwenkwellen-Eingriffsbereich auf, und an der axialen Stirnseite der Schwenkwelle ist eine den Schwenkwellen-Eingriffsbereich aufnehmende Schwingungsdämpfungsmaterial-Aufnahmeaussparung vorgesehen.

Dabei kann beispielsweise der Schwenkwellen-Eingriffsbereich wenigstens bereichsweise konvex gewölbt oder kegelartig oder kegelstumpfartig ausgebildet sein, und die Schwingungsdämpfungsmaterial-Aufnahmeaussparung kann zum Schwenkwellen-Eingriffsbereich komplementär geformt sein. Dies bedeutet, dass beispielsweise bei konvexer, wölbungsartiger Gestalt des Schwenkwellen-Eingriffsbereichs die Schwingungsdämpfungsmaterial-Aufnahmeaussparung mit ihrer komplementären Gestalt konkav gewölbt ist. Entsprechendes gilt auch bei kegelartiger oder kegelstumpfartiger Ausgestaltung bzw. bei sonstiger geometrischer Formgebung. Beispielweise könnte der Schwenkwellen-Eingriffsbereich auch bereichsweise kegelstumpfartig ausgebildet sein und in seinem Endbereich bzw. Spitzenbereich mit einer konvexen Wölbung ausgestaltet sein, wobei dann eine komplementäre Gestalt bei der Schwingungsdämpfung Material-Aufnahmeaussparung vorgesehen ist. Beispielsweise kann der Schwenkwellen-Eingriffsbereich kugelkalottenförmig ausgebildet sein.

Bei einer alternativen erfindungsgemäßen Ausgestaltungsvariante ist die Zuordnung von Aufnahmeaussparung und Eingriffsbereich zu der vorangehend dargestellten Aussparung umgekehrt. So weist der Schwingungsdämpfungsmaterial-Kontaktbereich eine Schwenkwellen-Aufnahmeaussparung auf, und an der axialen Stirnseite der Schwenkwelle ist ein in die Schwenkwellen-Aufnahmeaussparung eingreifender Schwingungsdämpfungsmaterial-Eingriffsbereich vorgesehen.

Auch bei dieser Anordnung kann für eine möglichst reibungsfreie Wechselwirkung der Schwingungsdämpfungsmaterial-Eingriffsbereich wenigstens bereichsweise konvex gewölbt oder kegelartig oder kegelstumpfartig ausgebildet sein, und die Schwenkwellen-Aufnahmeaussparung kann zum Schwingungsdämpfungsmaterial-Eingriffsbereich komplementär geformt sein. Beispielsweise kann auch dabei der Schwingungsdämpfungsmaterial-Eingriffsbereich kugelkalottenförmig ausgebildet sein.

Um die Funktionen der Befestigung einerseits und des Kontakts mit der Schwenkwelle andererseits räumlich zu trennen, wird vorgeschlagen, dass der Schwingungsdämpfungsmaterial-Befestigungsbereich bezüglich des Schwingungsdämpfungsmaterial-Kontaktbereichs nach radial außen hervorstehend oder/und den Schwingungsdämpfungsmaterial-Kontaktbereich wenigstens teilweise radial außen umgebend angeordnet ist. Alternativ oder zusätzlich könnte der Schwingungsdämpfungsmaterial-Befestigungsbereich in axialer Verlängerung des Schwingungsdämpfungsmaterial-Kontaktbereichs, also im Wesentlichen an dessen Rückseite vorgesehen sein.

Für eine stabile Abstützung des Schwingungsdämpfungsmaterials am Lagerbuchsenboden kann der Schwingungsdämpfungsmaterial-Befestigungsbereich plattenförmig ausgebildet.

Eine thermisch stabile Befestigung des Schwingungsdämpfungsmaterials kann beispielsweise dadurch erreicht werden, dass der Schwingungsdämpfungsmaterial-Befestigungsbereich an dem Lagerbuchsenboden durch Materialschluss, vorzugsweise Verschweißen, angebracht ist.

Für eine definierte Positionierung der Schwenkwelle bezüglich des Klappenrohrs wird weiter vorgeschlagen, dass die in Zuordnung zu dem ersten axialen Endbereich der Schwenkwelle vorgesehene erste Lageranordnung eine an dem Klappenrohr vorgesehene erste Lagerbuchse und ein in der ersten Lagerbuchse angeordnetes, die Schwenkwelle radial und axial bezüglich der Schwenkachse lagerndes erstes Schwenklager, vorzugsweise Gleitlager, umfasst. Da das erste Schwenklager neben der Radiallagerfunktion auch bzw. alleine die definierte Positionierung der Schwenkwelle in axialer Richtung vorsieht, wird einerseits eine Überbestimmung in der axialen Positionierung vermieden, andererseits wird im Bereich der zweiten Lageranordnungen die Möglichkeit der axialen Wechselwirkung zwischen der Schwenkwelle und dem Schwingungsdämpfungsmaterial bereitgestellt.

Die Abgasklappe umfasst vorteilhafterweise ferner einen Schwenkantrieb für die Schwenkwelle, wobei der Schwenkantrieb ein vermittels einer Kopplungsanordnung mit der Schwenkwelle zur gemeinsamen Drehung um die Schwenkachse gekoppeltes Antriebsorgan umfasst.

Die vorliegende Erfindung wird nachfolgend mit Bezug auf die beiliegenden Figuren detailliert beschrieben. Es zeigt:
- Fig. 1: eine Abgasklappe für eine Abgasanlage einer Brennkraftmaschine;
- Fig. 2: eine Detail-Schnittansicht eines eine Schwenkwelle der Abgasklappe in einem von einem Schwenkantrieb entfernten axialen Endbereich lagernden Lagerbereichs;
- Fig. 3: eine der Fig. 2 entsprechende Darstellung einer alternativen Ausgestaltungsart;
- Fig. 4: eine weitere der Fig. 2 entsprechende Darstellung einer alternativen Ausgestaltungsart.

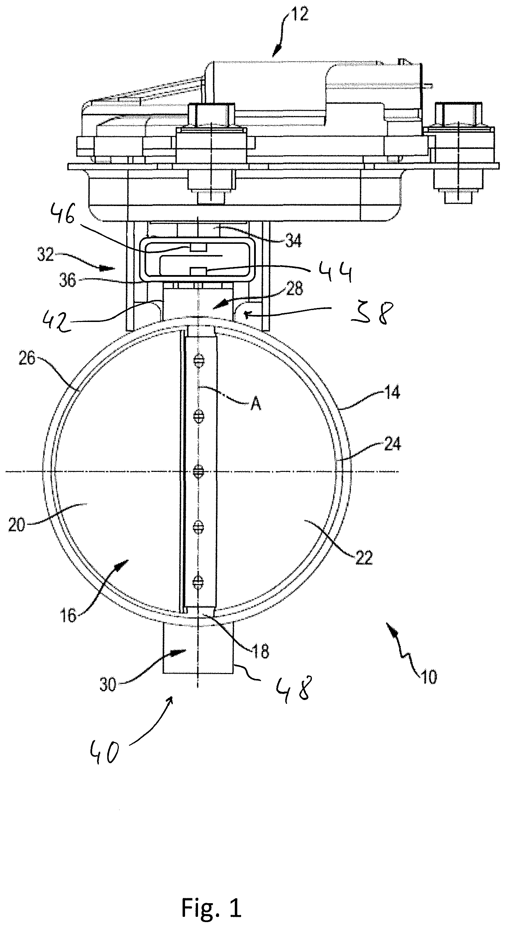

Die Fig. 1 zeigt in Seitenansicht eine allgemein mit 10 bezeichnete und beispielsweise in einer Abgasanlage einer Brennkraftmaschine einsetzbare Abgasklappe mit einem Klappenantrieb 12. Die Abgasklappe 10 umfasst ein Klappenrohr 14, in welchem eine allgemein mit 16 bezeichnete Klappenblende an einer Schwenkwelle 18 um eine Schwenkachse A schwenkbar getragen ist. Die Klappenblende 16 umfasst zwei Klappenflügel 20, 22, welche bei in einer Sperrstellung positionierter Klappenblende 16 an am Innenumfang des Klappenrohrs 14 vorgesehenen Flügelanschlägen 24, 26 anliegen.

Die Schwenkwelle 18 ist an ihren beiden axialen Endbereichen 28, 30 bezüglich des Klappenrohrs 14 um die Schwenkachse A drehbar bzw. schwenkbar getragen. In ihrem ersten axialen Endbereich 28 ist die Schwenkwelle 18 vermittels einer Kopplungsanordnung 32 mit einem Antriebsorgan 34 des Klappenantriebs 12, beispielsweise einer Antriebswelle, zur gemeinsamen Drehung gekoppelt. In diesem Bereich kann die Schwenkwelle 18 direkt oder über ein damit drehfestes Bauteil an die Kopplungsanordnung 32 angekoppelt sein. Die Kopplungsanordnung 32 kann beispielsweise ein aus Blechmaterial geformtes, flexibles und die Schwenkwelle 18 und das Antriebsorgan 34 in Richtung der Schwenkachse A axial voneinander weg beaufschlagendes Kopplungselement 36 umfassen, welches mit der Schwenkwelle 18 und dem Antriebsorgan 34 beispielsweise durch Formschlusseingriff zur gemeinsamen Drehung um die Schwenkachse A gekoppelt sein kann.

Die Schwenkwelle 18 ist in ihren beiden axialen Endbereichen 28, 30 vermittels jeweiliger Lageranordnungen 38, 40 am Klappenrohr 14 um die Schwenkachse A drehbar gelagert. Die in Fig. 1 oben erkennbare und dem Schwenkantrieb 12 näher positionierte Lageranordnung 38 umfasst eine am Klappenrohr 14 vorgesehene, beispielsweise durch Verschweißen festgelegte Lagerbuchse 42. Der erste axiale Endbereich 28 der Schwenkwelle 18 erstreckt sich durch die erste Lagerbuchse 42 hindurch und steht über diese axial hervor, so dass ein am ersten axialen Endbereich 28 vorgesehener Drehkopplungsvorsprung 44 in eine entsprechende Drehkopplungsaussparung des Kopplungselements 36 eingreifen kann. Ein an der als Antriebsorgan 34 wirksamen Antriebswelle des Schwenkantriebs 12 vorgesehener Drehkopplungsvorsprung 46 greift in entsprechender Weise in eine Drehkopplungsaussparung des Kopplungselements 36 ein.

In der ersten Lagerbuchse 42 ist ein in den Figuren nicht dargestelltes erstes Schwenklager vorgesehen, welches die Schwenkwelle 18 sowohl radial bezüglich der Schwenkachse A, als auch axial in Richtung der Schwenkachse A abstützt. Das erste Schwenklager kann beispielsweise als Gleitlager ausgebildet sein und sorgt somit auch unter der vermittels des Kopplungselements 36 generierten axialen Vorspannkraft für die Schwenkwelle 18 für eine definierte axiale Positionierung derselben im Klappenrohr 14.

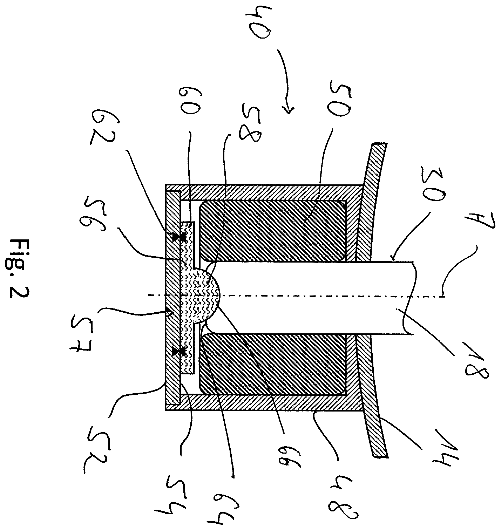

Mit ihrem zweiten axialen Endbereich 30 ist die Schwenkwelle 18 in der in Fig. 2 detailliert dargestellten zweiten Lageranordnung 40 um die Schwenkachse A drehbar gelagert. Die zweite Lageranordnung 40 umfasst eine zweite Lagerbuchse 48, welche am Klappenrohr 14 beispielsweise durch Verschweißung angebracht sein kann. Die Schwenkwelle 18 erstreckt sich durch eine im Klappenrohr 14 vorgesehene Öffnung hindurch in die zweite Lagerbuchse 48 hinein. In der zweiten Lagerbuchse 48 ist ein zweites Schwenklager 50 angeordnet, vermittels welchem die Schwenkwelle 18 in ihrem zweiten axialen Endbereich 30 radial bezüglich der Schwenkachse A abgestützt und somit drehbar gelagert ist. Eine axiale Abstütz- bzw. Lagerwirkung zwischen dem zweiten axialen Endbereich 30 der Schwenkwelle 18 und dem zweiten Schwenklager 50 besteht nicht, so dass eine Überbestimmung in der axialen Positionierung der Schwenkwelle 18 vermieden wird. Auch das zweite Schwenklager 50 kann beispielsweise als Gleitlager ausgebildet sein.

Die zweite Lagerbuchse 48 ist an ihrem vom Klappenrohr 14 entfernten Ende durch einen Lagerbuchsenboden 52 abgeschlossen. Der deckelartig ausgebildete Lagerbuchsenboden 52 kann in das axial offene Ende der zweiten Lagerbuchse 48 eingesetzt, beispielsweise eingepresst oder/und damit beispielsweise durch Verschweißung materialschlüssig verbunden, sein.

An der dem zweiten axialen Endbereich 30 der Schwenkwelle 18 zugewandten Innenseite 54 des Lagerbuchsenbodens 52 ist Schwingungsdämpfungsmaterial 56 angeordnet. Dieses vorzugsweise als ein intergraler Körper bereitgestelltes Schwingungsdämpfungsmaterial 56 umfasst in einem bezüglich der Schwenkachse A zentralen Bereich einen Schwingungsdämpfungsmaterial-Kontaktbereich 57 mit einem Schwenkwellen-Eingriffsbereich 58, und umfasst den Schwingungsdämpfungsmaterial-Kontaktbereich 57 radial außen vorzugsweise vollständig umgebend einen Schwingungsdämpfungsmaterial-Befestigungsbereich 60.

In dem plattenartig ausgebildeten Schwingungsdämpfungsmaterial-Befestigungsbereich 60 ist das Schwingungsdämpfungsmaterial 56 in radialem Abstand zum Schwenkwellen-Eingriffsbereich 58 beispielsweise durch eine Mehrzahl von Schweißpunkten 62 an der Innenseite 54 des Lagerbuchsenbodens 52 festgelegt. Dies kann erfolgen, bevor der Lagerbuchsenboden 52 an der Lagerbuchse 48 angebracht wird.

Der axial über den plattenartigen Schwingungsdämpfungsmaterial-Befestigungsbereich 60 in Richtung auf die Schwenkwelle 18 hervorstehende Schwenkwellen-Eingriffsbereich 58 ist konvex gewölbt, beispielsweise in Form einer Kugelkalotte, und greift in eine an einer axialen Stirnseite 64 der Schwenkwelle 18 ausgebildete Schwingungsdämpfungsmaterial-Aufnahmeaussparung 66 ein. Diese ist zur Formgebung des Schwenkwellen-Eingriffsbereichs 58 komplementär geformt, ist somit also konkav gewölbt.

Mit dem Schwenkwellen-Eingriffsbereich 58 steht das Schwingungsdämpfungsmaterial 56 in Kontakt mit dem zweiten axialen Endbereich 30 der Schwenkwelle 18. Das Schwingungsdämpfungsmaterial 56 ist beispielsweise mit Drahtmaterial, vorzugsweise Drahtgestrick oder dergleichen, ausgebildet und weist somit eine grundsätzlich poröse, flexible Struktur auf, so dass beim Anbringen des bereits das Schwingungsdämpfungsmaterial 56 tragenden Lagerbuchsenbodens 52 an der zweiten Lagerbuchse 48 der Schwenkwellen-Eingriffsbereich 58 in die Schwingungsdämpfungsmaterial-Aufnahmeaussparung 66 eingreifend und am zweiten axialen Endbereich 30 der Schwenkwelle 18 unter axialer Vorspannung anliegend positioniert wird. Aufgrund dieses Kontakts zwischen dem Schwingungsdämpfungsmaterial 56 und der Schwenkwelle 18 wird die Entstehung von Schwingungen beim Drehen bzw. Verschwenken der Schwenkwelle 18 um die Schwenkachse A unterdrückt bzw. es wird die Abgabe von Schall nach außen gedämpft bzw. unterdrückt. Somit entstehen im Betrieb der Abgasklappe 10 keine Schwingungen oder Schwingungsanregungen, welche sich beispielsweise auch auf das aus Blechmaterial aufgebaute Kopplungselement 36 übertragen könnten und von diesem in Form von Schall nach außen abgegeben werden könnten. Auch auf die Abgasklappe 10 gegebenenfalls im Betrieb übertragene Schwingungen können auf diese Art und Weise gedämpft werden und führen somit im Wesentlichen nicht zu einer Abgabe von Schall im Bereich der Abgasklappe 10.

Bei der erfindungsgemäß aufgebauten Abgasklappe 10 kann alternativ zu der dargestellten und vorangehend beschriebenen Ausgestaltung der Kontakt zwischen der Schwenkwelle 18 und dem Schwingungsdämpfungsmaterial 56 auch dadurch erreicht werden, dass die Schwenkwelle 18 mit ihrem axialen Ende, beispielsweise einem daran axial hervorstehenden, konvexen Schwingungsdämpfungsmaterial-Eingriffsbereich, beispielsweise in Form einer Kugelkalotte, in eine in dem Schwingungsdämpfungsmaterial 56 gebildete, komplementäre Aussparung eingreift. Diese Aussparung kann in dem Schwingungsdämpfungsmaterial 56 bereits vor dem Herstellen des Kontakts mit der Schwenkwelle 18 vorhanden sein, kann beispielsweise aber auch durch das Eindrücken der Schwenkwelle 18 in das Schwingungsdämpfungsmaterial 56 gebildet werden. Das am Lagerbuchsenboden 52 vorgesehene bzw. angebrachte Schwingungsdämpfungsmaterial 56 kann dabei in einer besonders einfach zu realisierenden Ausgestaltung im Wesentlichen in seiner ganzen radialen Erstreckung plattenartig und mit im Wesentlichen der gleichen axialen Dicke ausgebildet sein.

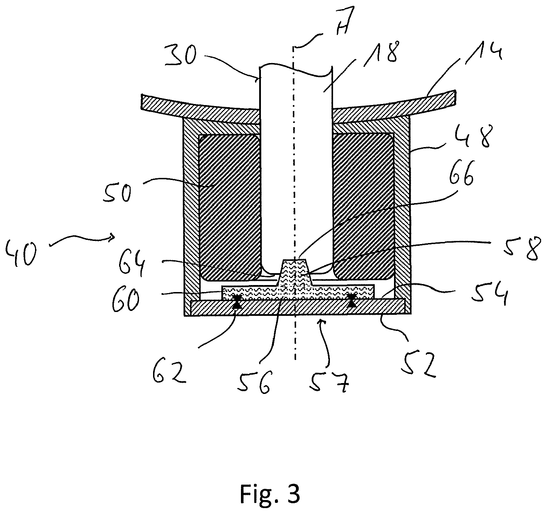

Die Fig. 3 zeigt eine alternative Ausgestaltung. Bei dem in Fig. 3 dargestellten Aufbau ist der Schwenkwellen-Eingriffsbereich 58 kegelstumpfartig geformt. Entsprechend ist die Schwingungsdämpfungsmaterial-Aufnahmeaussparung 66 in der Schwenkwelle 18 komplementär kegelstumpfartig geformt.

Es ist darauf hinzuweisen, dass beispielsweise auch eine Kombination der in den Fig. 2 und 3 dargestellten Ausgestaltungen möglich ist, so dass bei der in Fig. 3 dargestellten kegelstumpfartigen Ausgestaltung der Schwenkwellen-Eingriffsbereich 58 an seinem oberen Ende nicht plan, sondern mit der in Fig. 2 dargestellten Wölbung endet. Auch andere Formgebungen, wie beispielsweise eine kegelartige Formgebung des Schwenkwellen-Eingriffsbereichs 58, sind möglich.

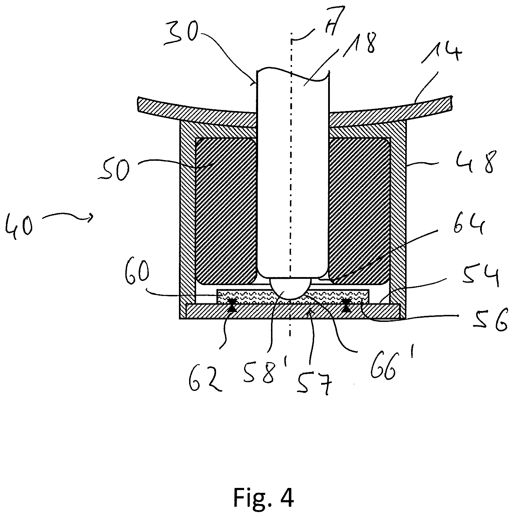

Eine weitere alternative Ausgestaltung ist in Fig. 4 dargestellt. Bei dieser Ausgestaltung ist der Schwingungsdämpfungsmaterial-Kontaktbereich 57 mit einer konkaven, wölbungsartigen Schwenkwellen-Aufnahmeaussparung 66' ausgebildet, während an der axialen Stirnseite 64 der Schwenkwelle 18 ein konvex gewölbter Schwingungsdämpfungsmaterial-Eingriffsbereich 58' gebildet ist, welcher in die komplementär geformte Schwenkwellen-Aufnahmeaussparung 66' eingreift. Insbesondere bei der flexiblen Ausgestaltung des Schwingungsdämpfungsmaterials 56 kann die Schwenkwellen-Aufnahmeaussparung 66' vollständig oder auch teilweise dadurch gebildet werden, dass der Schwingungsdämpfungsmaterial-Eingriffsbereich 58' in das Schwingungsdämpfungsmaterial 56 eingedrückt wird.

Es ist darauf hinzuweisen, dass auch bei der in Fig. 4 dargestellten Ausgestaltung andere Formgebungen des Schwingungsdämpfungsmaterial-Eingriffsbereichs 58' bzw. der Schwenkwellen-Aufnahmeaussparung 66' möglich sind. So könnte auch eine kegelstumpfartige, eine kegelartige oder eine kombinierte Formgebung verschiedener Geometrien, beispielsweise einer kegelstumpfartigen und einer wölbungsartigen Geometrie, vorgesehen sein.

## Patentansprüche

1. Abgasklappe, insbesondere für den Abgasstrom einer Brennkraftmaschine, umfassend ein Klappenrohr (14), eine im Inneren des Klappenrohrs (14) an einer um eine Schwenkachse (A) drehbaren Schwenkwelle (18) getragene Klappenblende (16), wobei die Schwenkwelle (18) in jedem ihrer beiden axialen Endbereiche (28, 30) vermittels einer Lageranordnung (38, 40) an dem Klappenrohr (14) drehbar getragen ist, wobei die Schwenkwelle (18) in einem ersten axialen Endbereich (28) zur Ankopplung an ein Antriebsorgan (34) eines Schwenkantriebs (12) ausgebildet ist, wobei die Schwenkwelle (18) in wenigstens einem axialen Endbereich (28, 30) in Kontakt mit bezüglich des Klappenrohrs (14) getragenem Schwingungsdämpfungsmaterial (56) ist, wobei die Schwenkwelle (18) in einem zweiten axialen Endbereich (30) in Kontakt mit dem Schwingungsdämpfungsmaterial (56) ist, wobei die in Zuordnung zu dem zweiten axialen Endbereich (30) der Schwenkwelle (18) vorgesehene zweite Lageranordnung (40) eine an dem Klappenrohr (14) vorgesehene zweite Lagerbuchse (48) und ein in der zweiten Lagerbuchse (48) angeordnetes, die Schwenkwelle (18) radial bezüglich der Schwenkachse (A) lagerndes zweites Schwenklager (50) umfasst, wobei das Schwingungsdämpfungsmaterial (56) axial zwischen der Schwenkwelle (18) und einem Lagerbuchsenboden (52) angeordnet ist, wobei das Schwingungsdämpfungsmaterial (56) einen die Schwenkwelle (18) im zweiten axialen Endbereich (30) an einer axialen Stirnseite (64) berührenden Schwingungsdämpfungsmaterial-Kontaktbereich (57) und einen an dem Lagerbuchsenboden angebrachten Schwingungsdämpfungsmaterial-Befestigungsbereich (60) umfasst, **dadurch gekennzeichnet,**
- **dass** der Schwingungsdämpfungsmaterial-Kontaktbereich (57) einen axial in Richtung auf die axiale Stirnseite (64) der Schwenkwelle (18) zu hervorstehenden Schwenkwellen-Eingriffsbereich (58) aufweist und an der axialen Stirnseite (64) der Schwenkwelle (18) eine den Schwenkwellen-Eingriffsbereich (58) aufnehmende Schwingungsdämpfungsmaterial-Aufnahmeaussparung (66) vorgesehen ist,
oder
- **dass** der Schwingungsdämpfungsmaterial-Kontaktbereich (57) eine Schwenkwellen-Aufnahmeaussparung (66') aufweist und an der axialen Stirnseite (64) der Schwenkwelle (18) ein in die Schwenkwellen-Aufnahmeaussparung (66') eingreifender Schwingungsdämpfungsmaterial-Eingriffsbereich (58') vorgesehen ist.

2. Abgasklappe nach Anspruch 1, **dadurch gekennzeichnet, dass** das Schwingungsdämpfungsmaterial (56) poröses Material umfasst.

3. Abgasklappe nach Anspruch 2, **dadurch gekennzeichnet, dass** das Schwingungsdämpfungsmaterial (56) offenporiges Material umfasst.

4. Abgasklappe nach einem der vorangehenden Ansprüche, **dadurch gekennzeichnet, dass** das Schwingungsdämpfungsmaterial (56) Drahtmaterial umfasst.

5. Abgasklappe nach Anspruch 4, **dadurch gekennzeichnet, dass** das Drahtmaterial Drahtgestrick, Drahtgewirk, Drahtgeflecht, Drahtgewebe oder Draht-Wirrmaterial umfasst.

6. Abgasklappe nach einem der Ansprüche 1-5, **dadurch gekennzeichnet, dass** das das zweite Schwenklager (50) ein Gleitlager ist.

7. Abgasklappe nach einem der Ansprüche 1-6, **dadurch gekennzeichnet, dass** das der Schwenkwellen-Eingriffsbereich (58) wenigstens bereichsweise konvex gewölbt oder kegelartig oder kegelstumpfartig ausgebildet ist, und dass die Schwingungsdämpfungsmaterial-Aufnahmeaussparung (66) zum Schwenkwellen-Eingriffsbereich (58) komplementär geformt ist.

8. Abgasklappe nach Anspruch 7, **dadurch gekennzeichnet, dass** der Schwenkwellen-Eingriffsbereich (58) kugelkalottenförmig ausgebildet ist.

9. Abgasklappe nach einem der Ansprüche 1-6, **dadurch gekennzeichnet, dass** das der Schwingungsdämpfungsmaterial-Eingriffsbereich (58') wenigstens bereichsweise konvex gewölbt oder kegelartig oder kegelstumpfartig ausgebildet ist, und dass die Schwenkwellen-Aufnahmeaussparung (66') zum Schwingungsdämpfungsmaterial-Eingriffsbereich (58') komplementär geformt ist.

10. Abgasklappe nach Anspruch 9, **dadurch gekennzeichnet, dass** der Schwingungsdämpfungsmaterial-Eingriffsbereich (58') kugelkalottenförmig ausgebildet ist.

11. Abgasklappe nach einem der Ansprüche 1-10, dass der Schwingungsdämpfungsmaterial-Befestigungsbereich (60) bezüglich des Schwingungsdämpfungsmaterial-Kontaktbereichs (57) nach radial außen hervorstehend oder/und den Schwingungsdämpfungsmaterial-Kontaktbereich (57) wenigstens teilweise radial außen umgebend angeordnet ist.

12. Abgasklappe nach einem der Ansprüche 1-11, **dadurch gekennzeichnet, dass** der Schwingungsdämpfungsmaterial-Befestigungsbereich (60) plattenförmig ausgebildet ist.

13. Abgasklappe nach einem der Ansprüche 1-12, **dadurch gekennzeichnet, dass** der Schwingungsdämpfungsmaterial-Befestigungsbereich (60) an dem Lagerbuchsenboden (52) durch Materialschluss, vorzugsweise Verschweißen, angebracht ist.

14. Abgasklappe nach einem der vorangehenden Ansprüche, **dadurch gekennzeichnet, dass** die in Zuordnung zu dem ersten axialen Endbereich (28) der Schwenkwelle (18) vorgesehene erste Lageranordnung (38) eine an dem Klappenrohr (14) vorgesehene erste Lagerbuchse (38) und ein in der ersten Lagerbuchse (38) angeordnetes, die Schwenkwelle (18) radial und axial bezüglich der Schwenkachse (A) lagerndes erstes Schwenklager, vorzugsweise Gleitlager, umfasst.

15. Abgasklappe nach einem der vorangehenden Ansprüche, **dadurch gekennzeichnet, dass** ein Schwenkantrieb (12) für die Schwenkwelle (18) vorgesehen ist, wobei der Schwenkantrieb (12) ein vermittels einer Kopplungsanordnung (32) mit der Schwenkwelle (18) zur gemeinsamen Drehung um die Schwenkachse (A) gekoppeltes Antriebsorgan (34) umfasst.

## Claims

1. An exhaust-gas flap, in particular for the exhaust-gas flow of an internal combustion engine, comprising a flap pipe (14), a flap plate (16) that is supported, in the interior of the flap pipe (14), on a pivot shaft (18) that is rotatable about a pivot axis (A), wherein the pivot shaft (18), in each of its two axial end regions (28, 30), is supported rotatably by means of a bearing arrangement (38, 40) on the flap pipe (14), and wherein the pivot shaft (18) is designed, in a first axial end region (28), for coupling to a drive element (34) of a pivoting drive (12), wherein the pivot shaft (18) is, in at least one axial end region (28, 30), in contact with vibration-damping material (56) that is supported relative to the flap pipe (14), wherein the pivot shaft (18) is, in a second axial end region (30), in contact with the vibration-damping material (56),
wherein the second bearing arrangement (40), which is provided so as to be assigned to the second axial end region (30) of the pivot shaft (18), comprises a second bearing bushing (48), which is provided on the flap pipe (14), and a second pivot bearing (50), which is arranged in the second bearing bushing (48) and which bears the pivot shaft (18) radially with respect to the pivot axis (A), wherein the vibration-damping material (56) is arranged axially between the pivot shaft (18) and a bearing bushing base (52), wherein the vibration-damping material (56) comprises a vibration-damping material contact region (57), which makes contact with the pivot shaft (18) in the second axial end region (30) at an axial face side (64), and a vibration-damping material fastening region (60), which is attached to the bearing bushing base,
**characterized in that**
- the vibration-damping material contact region (57) has a pivot shaft engagement region (58) which projects axially in the direction of the axial face side (64) of the pivot shaft (18), and that, on the axial face side (64) of the pivot shaft (18), there is provided a vibration-damping material receiving recess (66) which receives the pivot shaft engagement region (58),
or
- that the vibration-damping material contact region (57) has a pivot shaft receiving recess (66'), and that, on the axial face side (64) of the pivot shaft (18), there is provided a vibration-damping material engagement region (58') which engages into the pivot shaft receiving recess (66').

2. The exhaust-gas flap as claimed in claim 1, **characterized in that** the vibration-damping material (56) comprises porous material.

3. The exhaust-gas flap as claimed in claim 2, **characterized in that** the vibration-damping material (56) comprises open-pore material.

4. The exhaust-gas flap as claimed in any of the preceding claims, **characterized in that** the vibration-damping material (56) comprises wire material.

5. The exhaust-gas flap as claimed in claim 4, **characterized in that** the wire material comprises weft-knitted wire, warp-knitted wire, braided wire, woven wire or irregular wire material.

6. The exhaust-gas flap as claimed in one of claims 1-5, **characterized in that** the second pivot bearing (50) is a slide bearing.

7. The exhaust-gas flap as claimed in one of claims 1-6, **characterized in that** the pivot shaft engagement region (58) is at least regionally of convexly domed or conical or frustoconical form, and wherein the vibration-damping material receiving recess (66) is of complementary shape with respect to the pivot shaft engagement region (58).

8. The exhaust-gas flap as claimed in claim 7, **characterized in that** the pivot shaft engagement region (58) is of spherical-cap-shaped form.

9. The exhaust-gas flap as claimed in one of claims 1-6, **characterized in that** the vibration-damping material engagement region (58') is at least regionally of convexly domed or conical or frustoconical form, and that the pivot shaft receiving recess (66') is of complementary shape with respect to the vibration-damping material engagement region (58').

10. The exhaust-gas flap as claimed in claim 9, **characterized in that** the vibration-damping material engagement region (58') is of spherical-cap-shaped form.

11. The exhaust-gas flap as claimed in one of claims 1-10, **characterized in that** the vibration-damping material fastening region (60) is arranged so as to project radially outward with respect to the vibration-damping material contact region (57) and/or so as to at least partially surround the vibration-damping material contact region (57) radially to the outside.

12. The exhaust-gas flap as claimed in one of claims 1-11, **characterized in that** the vibration-damping material fastening region (60) is of plate-like form.

13. The exhaust-gas flap as claimed in one of claims 1-12, **characterized in that** the vibration-damping material fastening region (60) is attached to the bearing bushing base (52) by material cohesion, preferably welding.

14. The exhaust-gas flap as claimed in any of the preceding claims, **characterized in that** the first bearing arrangement (38), which is provided so as to be assigned to the first axial end region (28) of the pivot shaft (18), comprises a first bearing bushing (38), which is provided on the flap pipe (14), and a first pivot bearing, preferably plain bearing, which is arranged in the first bearing bushing (38) and which bears the pivot shaft (18) radially and axially with respect to the pivot axis (A).

15. The exhaust-gas flap as claimed in any of the preceding claims, **characterized in that** a pivoting drive (12) is provided for the pivot shaft (18), wherein the pivoting drive (12) comprises a drive element (34) which, by means of a coupling arrangement (32), is coupled to the pivot shaft (18) for conjoint rotation about the pivot axis (A).

## Revendications

1. Un clapet de gaz d'échappement, en particulier pour le flux de gaz d'échappement d'un moteur à combustion interne, comprenant un tuyau de clapet (14), une plaque de clapet (16) qui est supportée, à l'intérieur du tuyau de clapet (14), sur un arbre pivot (18) qui est rotatif autour d'un axe de pivotement (A), dans lequel l'arbre pivot (18), dans chacune de ses deux zones d'extrémité axiale (28, 30), est supporté de manière rotative au moyen d'un arrangement de roulements (38, 40) sur le tuyau de clapet (14), et dans lequel l'arbre pivot (18) est conçu, dans une première zone d'extrémité axiale (28), pour être couplé à un élément d'entraînement (34) d'un entraînement pivotant (12), dans lequel l'arbre pivot (18) est, dans au moins une zone d'extrémité axiale (28, 30), en contact avec un matériau d'amortissement des vibrations (56) qui est supporté par rapport au tuyau de clapet (14),
dans lequel l'arbre pivot (18) est, dans une deuxième zone d'extrémité axiale (30), en contact avec le matériau d'amortissement des vibrations (56),
dans lequel le deuxième palier (40), qui est prévu pour être affecté à la deuxième zone d'extrémité axiale (30) de l'arbre pivot (18), comprend un deuxième coussinet (48), qui est prévu sur le tuyau de clapet (14), et un deuxième palier de pivot (50), qui est disposé dans le deuxième coussinet (48) et qui supporte l'arbre pivot (18) radialement par rapport à l'axe de pivotement (A), dans lequel le matériau d'amortissement des vibrations (56) est disposé axialement entre l'arbre pivot (18) et une base de coussinet (52), dans lequel le matériau d'amortissement des vibrations (56) comprend une zone de contact de matériau d'amortissement des vibrations (57), qui entre en contact avec l'arbre pivot (18) dans la deuxième zone d'extrémité axiale (30) au niveau d'une face axiale (64), et une zone de fixation de matériau d'amortissement des vibrations (60), qui est fixée à la base du coussinet,
**caractérisé en ce que**
- la zone de contact de matériau d'amortissement des vibrations (57) comporte une zone d'engagement d'arbre pivot (58) qui fait saillie axialement en direction de la face axiale (64) de l'arbre pivot (18), et que, sur la face axiale (64) de l'arbre pivot (18), il y a un logement de réception de matériau d'amortissement des vibrations (66) qui reçoit la zone d'engagement d'arbre pivot (58),
ou
- que la zone de contact de matériau d'amortissement des vibrations (57) comporte un logement d'arbre pivot (66') et que, sur la face axiale (64) de l'arbre pivot (18), une zone d'engagement de matériau d'amortissement des vibrations (58') s'engage dans le logement d'arbre pivot (66').

2. Le clapet de gaz d'échappement selon la revendication 1, **caractérisé en ce que** le matériau d'amortissement des vibrations (56) comprend un matériau poreux.

3. Le clapet de gaz d'échappement selon la revendication 2, **caractérisé en ce que** le matériau d'amortissement des vibrations (56) comprend un matériau à pores ouverts.

4. Le clapet de gaz d'échappement selon l'une des revendications précédentes, **caractérisé en ce que** le matériau d'amortissement des vibrations (56) comprend un matériau en fil de fer.

5. Le clapet de gaz d'échappement selon la revendication 4, **caractérisé en ce que** le matériau filaire comprend du fil tricoté en trame, du fil tricoté en chaîne, du fil tressé, du fil tissé ou du matériau filaire irrégulier.

6. Le clapet de gaz d'échappement selon l'une des revendications 1 à 5, **caractérisé en ce que** le deuxième palier de pivot (50) est un palier lisse.

7. Le clapet de gaz d'échappement selon l'une des revendications 1 à 6, **caractérisé en ce que** la zone d'engagement d'arbre pivot (58) est au moins dans certaines parties de forme convexe, conique ou tronconique, et **en ce que** le logement de réception de matériau d'amortissement des vibrations (66) est de forme complémentaire par rapport à la zone d'engagement d'arbre pivot (58).

8. Le clapet de gaz d'échappement selon la revendication 7, **caractérisé en ce que** la zone d'engagement d'arbre pivot (58) est en forme de calotte sphérique.

9. Le clapet de gaz d'échappement selon l'une des revendications 1 à 6, **caractérisé en ce que** la zone d'engagement de matériau d'amortissement des vibrations (58') est au moins dans certaines parties de forme convexe, conique ou tronconique, et que le logement de réception d'arbre pivot (66') est de forme complémentaire par rapport à la zone d'engagement de matériau d'amortissement des vibrations (58').

10. Le clapet de gaz d'échappement selon la revendication 9, **caractérisé en ce que** la zone d'engagement de matériau d'amortissement des vibrations (58') est en forme de calotte sphérique.

11. Le clapet de gaz d'échappement selon l'une des revendications 1 à 10, **caractérisé en ce que** la zone de fixation de matériau d'amortissement des vibrations (60) est disposée de manière à faire saillie radialement vers l'extérieur par rapport à la zone de contact de matériau d'amortissement des vibrations (57) et/ou de manière à entourer au moins partiellement la zone de contact de matériau d'amortissement des vibrations (57) radialement vers l'extérieur.

12. Le clapet de gaz d'échappement selon l'une des revendications 1 à 11, **caractérisé en ce que** la zone de fixation de matériau d'amortissement des vibrations (60) a la forme d'une plaque.

13. Le clapet de gaz d'échappement selon l'une des revendications 1 à 12, **caractérisé en ce que** la zone de fixation de matériau d'amortissement des vibrations (60) est fixée à la base de coussinet (52) par cohésion des matériaux, de préférence par soudage.

14. Le clapet de gaz d'échappement selon l'une des revendications précédentes, **caractérisé en ce que** le premier palier (38), qui est prévu pour être affecté à la première zone d'extrémité axiale (28) de l'arbre pivot (18), comprend un premier coussinet (38), qui est prévu sur le tuyau de clapet (14), et un premier palier de pivot, de préférence un palier lisse, qui est disposé dans le premier coussinet (38) et qui supporte l'arbre pivot (18) radialement et axialement par rapport à l'axe de pivotement (A).

15. Le clapet de gaz d'échappement selon l'une des revendications précédentes, **caractérisé en ce qu'**un entraînement pivotant (12) est prévu pour l'arbre pivot (18), dans lequel l'entraînement pivotant (12) comprend un élément d'entraînement (34) qui, au moyen d'un dispositif d'accouplement (32), est accouplé à l'arbre pivot (18) pour une rotation conjointe autour de l'axe de pivotement (A).
